# EUROPÄISCHE PATENTSCHRIFT

(11) **EP 2 789 975 B1**
(45) Veröffentlichungstag und Bekanntmachung des Hinweises auf die Patenterteilung: **04.04.2018**
(21) Anmeldenummer: 14155498.0
(22) Anmeldetag: 18.02.2014
(51) Int. Cl.: G01C 15/02, F16M 11/06, E04G 21/18, G01C 15/06

(54) **Absteckmarker**
Marker
Marqueur de fixation

(30) Priorität: 12.04.2013 DE 202013101577 U
(43) Veröffentlichungstag der Anmeldung: 15.10.2014
(73) Patentinhaber: Rothbucher, Georg, 83457 Bayerisch Gmain (DE)
(72) Erfinder: Rothbucher, Georg, 83457 Bayerisch Gmain (DE)
(74) Vertreter: Schaumburg und Partner Patentanwälte mbB

(56) Entgegenhaltungen:
- EP-A1- 1 310 765
- WO-A1-87/04672
- US-B1- 7 669 341

## Beschreibung

Die Erfindung betrifft einen Absteckmarker zum Abstecken von Bauwerken und dergleichen mit einer Fußplatte und einer Trägerplatte, die ein eine Zielmarke bildendes Reflexionselement trägt.

Es sind Vermessungsplaketten bekannt, die eine Reflexfolie tragen und zur Festlegung eines Vermessungspunktes flach auf ein Objekt auflegbar sind oder auch beispielsweise mit einem Halter verbunden sind, so dass sie an einem Objekt befestigbar oder in den Boden einsteckbar sind. Ferner sind z.B. aus der EP 1 310 765 A1 sogenannte Winkelplaketten bekannt mit mindestens zwei rechtwinklig zueinander gerichteten Platten, von denen wenigstens eine eine Reflexfolie trägt. Die bisher bekannten Vermessungsplaketten oder Absteckmarker sind häufig sperrig und/oder bei der Festlegung des Vermessungspunktes umständlich zu handhaben.

Die WO 87/04672 A1 zeigt ein Warndreieck mit einer annähernd dreieckförmigen mittleren Trägerplatte, die mit einem hochreflektierenden Material beschichtet ist und an der zwei Fußplatten angelenkt sind, die zwischen einer Gebrauchsstellung, in der sie senkrecht von der Trägerplatte abstehen und einer Transportstellung verschwenkbar sind, in der sie flach an der mittleren Trägerplatte anliegen. Damit kann das Warndreieck einerseits standsicher aufgestellt und andererseits bequem transportiert werden. Die Fußplatten können auch in zwei Abschnitte unterteilt werden, die getrennt voneinander verschwenkt werden können.

Die US 7,669,341 B1 zeigt ein Vermessungsprisma mit einem Ständer, der einen das Prisma tragenden Stab und eine Fußplatte umfasst, an dem der Stab mittels eines Kugelgelenkes verstellbar ist, so dass er in beliebigen Positionen justiert werden kann.

Der Erfindung liegt die Aufgabe zugrunde, einen Absteckmarker der eingangs genannten Art anzugeben, der bequem und präzise zu handhaben ist, bei Nichtgebrauch bequem zu verstauen ist und preiswert in der Herstellung ist.

Zur Lösung dieser Aufgabe wird erfindungsgemäß vorgeschlagen, dass bei dem eingangs genannten Absteckmarker die Trägerplatte gegenüber der Fußplatte zwischen einer Transportstellung, in der die Trägerplatte im Wesentlichen parallel zur Fußplatte liegt, und einer Arbeitsstellung verstellbar ist, in der die Trägerplatte senkrecht zur Fußplatte steht, und dass die Fußplatte mindestens eine Durchbrechung hat mit einem ersten Rand, der parallel zu der in ihrer Arbeitsstellung stehenden Trägerplatte in der Bezugsebene des Reflexionselementes verläuft, und mit einem zweiten Rand, der senkrecht zum ersten Rand in einer Ebene liegt, die senkrecht zur Fußplatte durch das Zentrum des Reflexionselementes verläuft.

Der erfindungsgemäße Absteckmarker kann bei Nichtgebrauch flach zusammengepackt werden, so dass er bequem in die Tasche gesteckt werden kann. Im aufgestellten Zustand bietet er die Möglichkeit, den aufgefundenen Vermessungspunkt sofort zu markieren, indem mit einem Stift entlang dem ersten Rand und dem zweiten Rand ein Strich auf die Unterlage gezogen wird, ohne dass hierzu der Absteckmarker aus seiner eingemessenen Position bewegt werden muss. Dadurch kann man schnell und präzise den Vermessungspunkt anzeichnen und anschließende den Absteckmarker wieder entfernen.

Vorzugsweise sind die Fußplatte und die Trägerplatte über ein Gelenk miteinander verbunden, wobei zweckmäßigerweise die Trägerplatte in der Arbeitsstellung gegenüber der Fußplatte lösbar arretierbar ist. Die Arretierung kann beispielsweise dadurch erfolgen, dass an der Trägerplatte und/oder der Fußplatte ein Rastelement ausgebildet ist, das beim Verschwenken der Trägerplatte gegenüber der Fußplatte in der Arbeitsstellung der Trägerplatte einschnappt und durch einen gewissen Druck auf die Trägerplatte beim Zusammenklappen der Platten wieder ausrastet.

Bei einer bevorzugten Ausführungsform ist ein den Gelenkspalt zwischen Trägerplatte und Fußplatte begrenzender Rand als erster Rand ausgebildet, so dass in dieser Richtung keine eigene Durchbrechung vorgesehen sein muss.

Um die Standsicherheit des Absteckmarkers auf einer Unterlage zu erhöhen und damit seine Handhabung zu erleichtern, ist es zweckmäßig, wenn die Fußplatte zwei mindestens annähernd gleich große Plattenabschnitte umfasst, die derart gelenkig miteinander verbunden sind, dass sie zwischen einer ersten Stellung, in der sie parallel zueinander liegen, und einer zweiten Stellung klappbar sind, in der sie miteinander fluchtend in einer gemeinsamen Ebene liegen. Somit bietet der Absteckmarker in der Gebrauchsstellung, d.h. in der zweiten Stellung der Plattenabschnitte, eine große solide Standfläche und hat andererseits für den Transport nur geringe Abmessungen. Vorzugsweise sind die beiden Plattenabschnitte durch ein gemeinsames Gelenk miteinander und mit der Trägerplatte so verbunden, dass sie in ihrer ersten Stellung die Trägerplatte zwischen sich einschließen und damit schützen. In der Gebrauchsstellung steht die Trägerplatte mittig zwischen den beiden Plattenabschnitten und kann somit nicht umfallen.
Vorzugsweise sind an mindestens einem der Plattenabschnitte und/oder an der Trägerplatte Mitnehmerelemente derart ausgebildet, dass beim Verschwenken der Plattenabschnitte aus ihrer ersten Stellung in ihre zweite Stellung die Trägerplatte aus der Transportstellung in die Arbeitsstellung aufgerichtet wird. Beim Aufklappen der beiden Plattenabschnitte aus der Transportstellung wird die Trägerplatte somit automatisch in ihre Arbeitsstellung überführt.
Die Handhabung des Absteckmarkers lässt sich noch dadurch verbessern, dass die durch den zweiten Rand begrenzte schlitzförmige Durchbrechung in beiden Plattenabschnitten ausgebildet ist.

In der Regel ist das auf der Trägerplatte angeordnete Reflexionselement eine flache, eine Zielmarke bildende Reflexionsfolie. Für größere Entfernungen ist eine solche Zielmarke oder Reflexionsfolie u.U. nicht ausreichend und es wird ein Vermessungsprisma benötigt. Hierfür wird im Allgemeinen ein sogenannter Prismenstab verwendet, der mit einer Spitze auf eine Unterlage aufsetzbar ist und mit Hilfe einer Libelle senkrecht gehalten werden kann. Die Handhabung des Prismenstabes ist allerdings relativ umständlich, da einerseits die Position des Stabes auf der Unterlage bei der Suche des richtigen Vermessungspunktes verändert und dabei aber der Prismenstab senkrecht gehalten werden muss.

Zur Beseitigung dieser Schwierigkeiten wird erfindungsgemäß vorgeschlagen, dass an der Trägerplatte des Absteckmarkers eine Halterung für einen ein Reflexionselement tragenden Stab angeordnet ist derart, dass der Bezugspunkt oder die Bezugsebene des an dem Stab vorgesehenen Reflexionselementes mit der Bezugsebene des an der Trägerplatte angeordneten Reflexionselementes zusammenfällt. Mit dieser Halterung lässt sich die Handhabung des das Reflexionselement tragenden Stabes, beispielsweise des Prismenstabes, deutlich vereinfachen. Er steht automatisch senkrecht auf der Unterlage und kann durch Hin- und Herschieben des Absteckmarkers auf der Unterlage bequem ausgerichtet werden. Ist der Vermessungspunkt gefunden, kann dieser auf der Unterlage wie oben beschrieben angezeichnet werden.

Vorzugsweise hat die Halterung eine konische Stecköffnung zur Aufnahme eines konischen Endabschnittes des Stabes. Damit lässt sich der Stab in der Halterung zuverlässig zentrieren. Vorzugsweise besteht dabei das konische Stabende zumindest teilweise aus einem ferromagnetischen Material, wobei in der Stecköffnung der Halterung ein Magnet angeordnet ist. Der Stab wird damit in die Stecköffnung hineingezogen und zentriert und gleichzeitig festgehalten. Er kann ohne Schwierigkeiten und ohne die Lösung irgendwelcher Arretierungen aus der Stecköffnung wieder herausgezogen werden. Die Halterung kann einstückig mit der Trägerplatte sein, sie kann aber auch lösbar mit der Trägerplatte verbindbar sein, so dass sie nur bei Bedarf an der Trägerplatte angebracht wird. Beispielsweise kann die Halterung auf die Trägerplatte aufklipsbar sein.

Der erfindungsgemäße Absteckmarker kann preiswert hergestellt werden, indem die Plattenabschnitte der Fußplatte und die Trägerplatte jeweils einteilig aus Kunststoff gespritzt werden.

Die folgende Beschreibung erläutert in Verbindung mit den beigefügten Zeichnungen die Erfindung anhand eines Ausführungsbeispieles. Es zeigen:
- Fig.1: eine perspektivische Darstellung eines in seine Arbeitsstellung aufgeklappten Absteckmarkers einschließlich einer Halterung für einen Prismenstab,
- Fig.2: eine perspektivische Darstellung des in seine Transportstellung zusammengeklappten Absteckmarkers ohne die Halterung für den Prismenstab,
- Fig.3a und 3b, 4a und 4b, 5a und 5b: jeweils eine Draufsicht bzw. eine Seitenansicht eines ersten Plattenabschnittes der Fußplatte, der Trägerplatte bzw. eines zweiten Abschnittes der Fußplatte,
- Fig.6: eine vereinfachte Darstellung des Gelenkbereiches zwischen den drei miteinander gelenkig verbundenen Plattenabschnitten mit senkrecht zur Bildebene gerichteter Gelenkachse,
- Fig.7: eine vergrößerte Darstellung des Gelenkbereiches zwischen den Plattenabschnitten zur Erläuterung der Arretierung der Trägerplatte,
- Fig.8: eine Seitenansicht der in Fig.1 dargestellten Halterung für einen Prismenstab und
- Fig.9: einen die Stabachse enthaltenden Schnitt durch die Halterung im Bereich der Stecköffnung derselben.

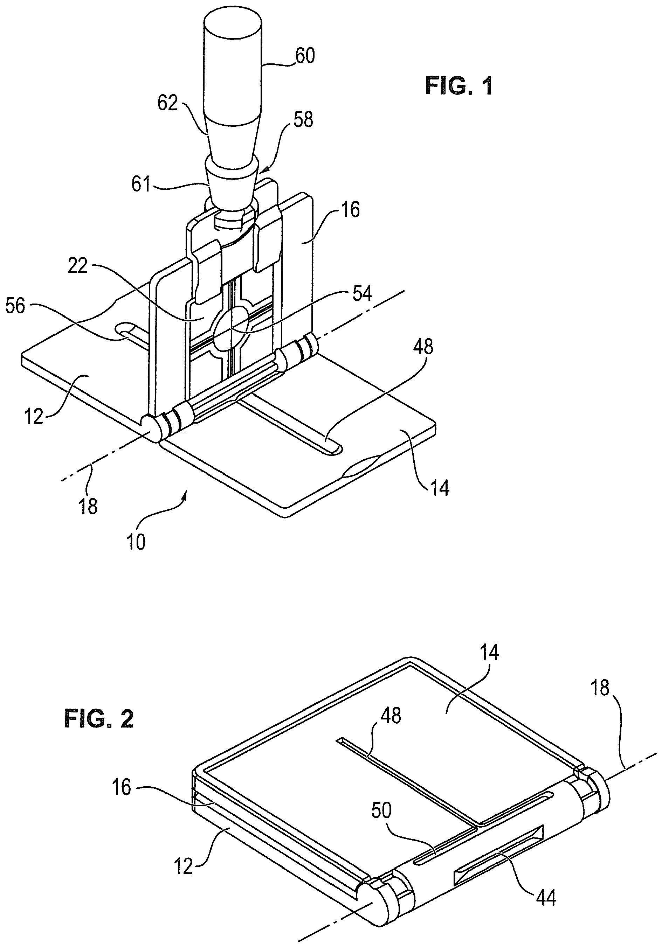

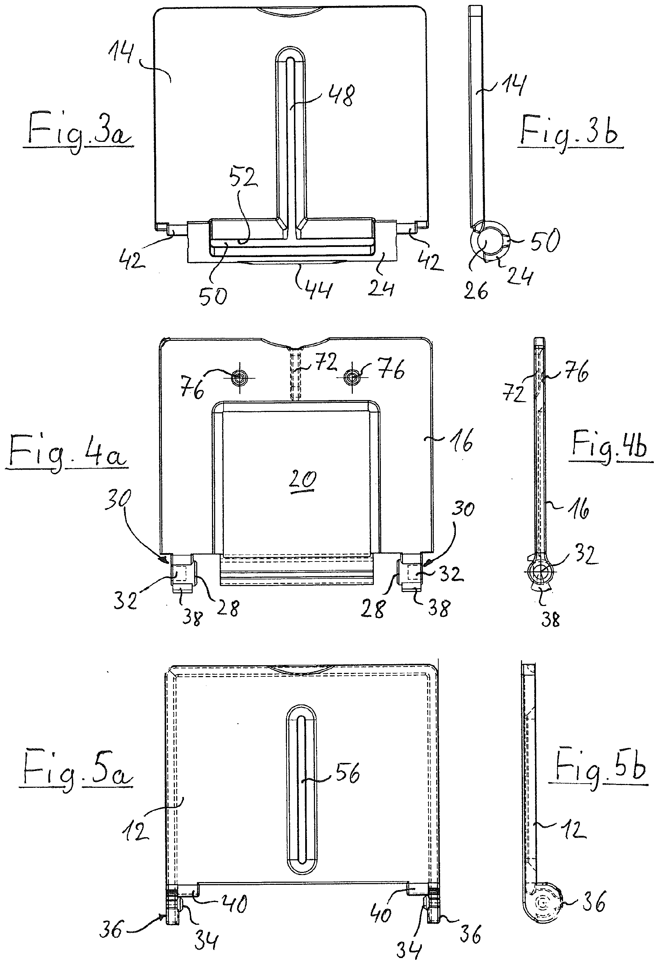

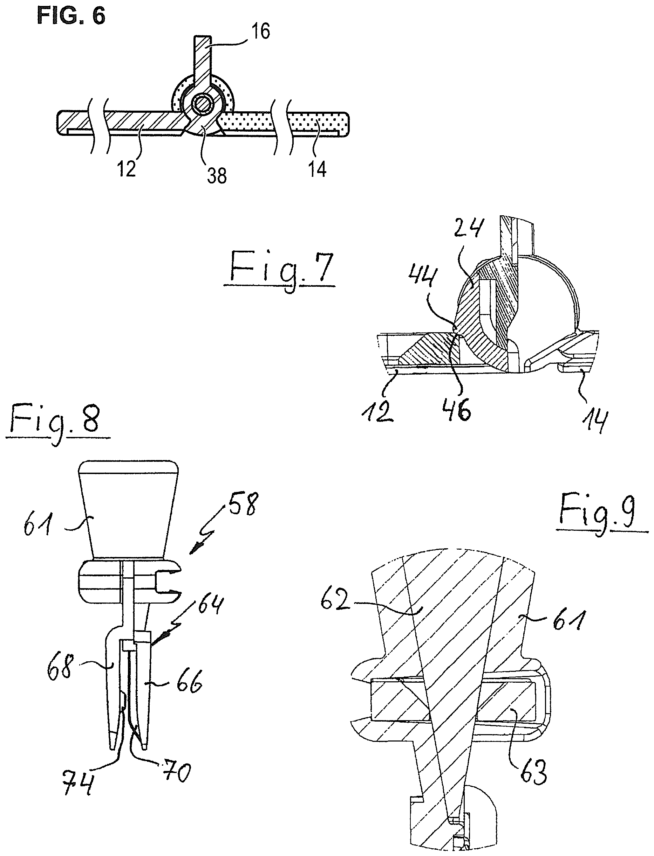

Der in der Fig.1 dargestellte Absteckmarker umfasst eine allgemein mit 10 bezeichnete Fußplatte mit einer Grundplatte 12 und einer Deckplatte 14, die beide untereinander sowie mit einer Trägerplatte 16 um eine Schwenkachse 18 gelenkig so miteinander verbunden sind, dass sie zwischen der in der Fig.1 dargestellten Arbeitsstellung des Absteckmarkers und einer in der Fig.2 dargestellten Transportstellung verschwenkbar sind.
Die Platten 12 bis 16 sind in den Fig.3a, b, 4a, b und 5a, b dargestellt. Die Fig.4a, 4b zeigen die Trägerplatte 16, die in einem Feld 20 eine Reflexionsfolie trägt, welche eine Zielmarke 22 bildet. Die Ebene des Feldes 20 bildet die Bezugsebene der Zielmarke 22. Die in den Fig.3a, 3b dargestellte Deckplatte 14 hat entlang ihres unteren Randes einen zylindrischen Ansatz 24, in dessen Stirnenden Lageröffnungen 26 ausgebildet sind. Sie dienen zur Aufnahme von Lagerzapfen 28, die an zwei Lagerfortsätzen 30 am unteren Rand der Trägerplatte 16 ausgebildet sind. Die Fortsätze 30 wiederum haben auf ihren Außenseiten Lageröffnungen 32, in welche Lagerzapfen 34 eingreifen, die an zwei am unteren Rand der Grundplatte 12 ausgebildeten Lagerfortsätzen 36 vorgesehen sind. Die Abmessungen der Lagerzapfen 28 und 34 sind so gewählt, dass unter Ausnutzung der Elastizität des für die Herstellung der Platten verwendeten Kunststoffmaterials die Lagerzapfen 28 und 34 in die jeweiligen Lageröffnungen 26 bzw. 32 eingedrückt werden können, um die drei Platten 12, 14 und 16 aneinander zu montieren.
An den Lagerzapfen 28 der Trägerplatte 16 sind sektorförmige Mitnehmerfortsätze 38 ausgebildet (Fig.4a, 4b), die zum Zusammenwirken mit Mitnehmernasen 40, 42 bestimmt sind, die am unteren Rand der Grundplatte 12 bzw. der Deckplatte 14 ausgebildet sind. Beim Auseinanderklappen von Grundplatte 12 und Deckplatte 14 schlagen die Mitnehmernasen 40 bzw. 42 an den sektorförmigen Mitnehmerfortsätzen 38 an und richten auf diese Weise die Trägerplatte 16 automatisch auf, so dass sie in der in der Fig.1 dargestellten Arbeitsstellung senkrecht zu der Grundplatte 10 steht. In dieser Position sind die sektorförmigen Mitnehmerfortsätze 38 zwischen den Mitnehmernasen 40 und 42 eingeklemmt, so dass die Trägerplatte 16 ihre aufrechte Stellung beibehält (Fig.6). Um ein unbeabsichtigtes Zusammenklappen der Plattenteile 12, 14, 16 zu vermeiden, ist an der Außenumfangsfläche des zylindrischen Ansatzes 24 der Deckplatte 14 eine längliche Rastnase 44 ausgebildet, die im auseinandergeklappten Zustand des Absteckmarkers über den unteren Rand 46 der Grundplatte 12 schnappt, wie dies Fig.7 zeigt.
In der Deckplatte 14 ist eine T-förmige Durchbrechung ausgebildet, deren T-Stil 48 senkrecht zur Schwenkachse 18 gerichtet ist und deren T-Querbalken 50 als achsparalleler Schlitz den Ansatz 24 durchsetzt. Dieser Schlitz 50 ist so gelegt, dass einer seiner Ränder 52 zumindest annähernd in der Bezugsebene 20 der Zielmarke 22 liegt. Somit kann dieser Rand genutzt werden, um mit einem durch den Schlitz 50 geführten Stift einen die Bezugsebene kennzeichnenden Strich auf die Unterlage zu ziehen, ohne dass der Absteckmarker auf der Unterlage bewegt werden muss. Der Schaft 48 des T-förmigen Schlitzes fluchtet mit der senkrechten Linie des Fadenkreuzes 54 der Zielmarke 22, so dass der Schlitz 48 mit seinen Rändern oder einem seiner Ränder dazu genutzt werden kann, einen zum Rand 52 senkrechten Strich auf der Unterlage zu ziehen. Damit kann schnell und genau der eingemessene Punkt auf der Unterlage angezeichnet werden. Um die Genauigkeit noch zu erhöhen, ist auch in der Grundplatte 12 eine den Schlitz 48 fortsetzende schlitzförmige Durchbrechung 56 ausgebildet, so dass eine entsprechende Linie auf der Unterlage gezogen werden kann, so dass der eingemessene Punkt als Kreuzung zweier Linien genau bestimmt werden kann.
Fig.1 zeigt ferner einer auf die Trägerplatte 16 aufgesteckte Halterung 58 für einen an sich bekannten Prismenstab 60. Dieser trägt ein nicht dargestelltes Vermessungsprisma sowie üblicherweise eine Libelle, um den Prismenstab 60 senkrecht zur Unterlage ausrichten zu können. Er ist an seinem unteren Ende mit einem kegelförmigen Abschnitt 62 versehen.
Die Halterung 58 hat ferner eine konische Stabaufnahme 61 mit der gleichen Konizität wie der Endabschnitt 62 des Prismenstabes 60. Im unteren Bereich dieser Stabaufnahme 61 ist ein ringförmiger Magnet 63 angeordnet, der dazu bestimmt ist, den zumindest in seinem konischen Endabschnitt 62 aus einem ferromagnetischen Material bestehenden Prismenstab 60 in die konische Einstecköffnung der Stabaufnahme 61 hineinzuziehen und dort festzuhalten.

Die Halterung 58 umfasst ferner einen gabelförmigen Klips 64 mit einem mittig liegenden Schenkel 66 auf der einen Seite und zwei gegenüber diesem seitlich versetzten Schenkeln 68 auf der anderen Seite. An der Innenseite des Schenkels 66 ist eine Rippe 70 ausgebildet, die zum Eingriff in eine an der Trägerplatte 16 ausgebildete, senkrecht zur Achse 18 verlaufende Nut 72 bestimmt ist. Ebenso tragen die beiden Schenkel 68 jeweils eine Noppe 74 an ihrer Innenseite, die in entsprechende Vertiefungen 76 in der Trägerplatte 16 beiderseits der Nut 72 eingreifen können (Fig.4a). Damit ist ein zentrierter Sitz der Halterung 58 auf der Trägerplatte 16 gewährleistet, d.h. eine Stellung des Prismenstabes 16, in der seine Achse mit der senkrechten Linie des Fadenkreuzes 54 der Zielmarke 22 fluchtet. Die Halterung 58 ist bei dem vorstehend beschriebenen Ausführungsbeispiel von der Trägerplatte 16 abnehmbar, so dass der Absteckmarker im zusammengeklappten Zustand (Fig.2) besonders raumsparend und flach ist. Die Stabaufnahme 61 könnte aber auch fest mit der Trägerplatte 16 verbunden sein, so dass dieses Teil als einstückiges Kunststoffspritzteil gefertigt werden kann.

## Patentansprüche

1. Absteckmarker zum Abstecken von Bauwerken und dergleichen mit einer Fußplatte (10) und einer Trägerplatte (16), die ein eine Zielmarke bildendes Reflexionselement (22) trägt, wobei die Fußplatte (10) mindestens eine Durchbrechung (48, 50, 56) hat mit einem ersten Rand (52), der parallel zu der in einer Arbeitsstellung senkrecht zur Fußplatte (10) stehenden Trägerplatte (16) in der Bezugsebene (20) des Reflexionselementes (22) verläuft, und mit einem zweiten Rand, der senkrecht zum ersten Rand in einer Ebene liegt, die senkrecht zur Fußplatte (10) durch das Zentrum des Reflexionselementes (22) verläuft, **dadurch gekennzeichnet, dass** der Absteckmarker so ausgebildet ist, dass die Trägerplatte (16) gegenüber der Fußplatte (10) zwischen einer Transportstellung, in der die Trägerplatte (16) im Wesentlichen parallel zur Fußplatte (10) liegt, und der Arbeitsstellung, in der die Trägerplatte (16) senkrecht zur Fußplatte (10) steht, verstellbar ist.

2. Absteckmarker nach Anspruch 1, **dadurch gekennzeichnet, dass** die Fußplatte (10) und die Trägerplatte (16) über ein Gelenk miteinander verbunden sind.

3. Absteckmarker nach Anspruch 1 oder 2, **dadurch gekennzeichnet, dass** die Trägerplatte (16) in ihrer Arbeitsstellung gegenüber der Fußplatte (10) lösbar arretierbar ist.

4. Absteckmarker nach Anspruch 3, **dadurch gekennzeichnet, dass** an der Trägerplatte (16) und/oder der Fußplatte (10) ein die Arretierung bewirkendes Rastelement (44) ausgebildet ist.

5. Absteckmarker nach einem der Ansprüche 2 bis 4, **dadurch gekennzeichnet, dass** ein den Gelenkspalt zwischen Trägerplatte (16) und Fußplatte (10) begrenzender Rand den genannten ersten Rand (52) bildet.

6. Absteckmarker nach einem der Ansprüche 1 bis 5, **dadurch gekennzeichnet, dass** die Fußplatte (10) zwei mindestens annähernd gleich große Plattenabschnitte (12, 14) umfasst, die derart gelenkig miteinander verbunden sind, dass sie zwischen einer der Transportstellung entsprechenden ersten Stellung, in der sie parallel zueinander liegen, und einer der Arbeitsstellung entsprechenden zweiten Stellung klappbar sind, in der sie miteinander fluchtend in einer gemeinsamen Ebene liegen.

7. Absteckmarker nach Anspruch 6, **dadurch gekennzeichnet, dass** die beiden Plattenabschnitte (12, 14) durch ein gemeinsames Gelenk miteinander und mit der Trägerplatte (16) so verbunden sind, dass sie in ihrer ersten Stellung die Trägerplatte (16) zwischen sich einschließen.

8. Absteckmarker nach Anspruch 6 oder 7, **dadurch gekennzeichnet, dass** an mindestens einem der Plattenabschnitte (12, 14) und/oder an der Trägerplatte (16) Mitnehmerelemente (38, 40, 42) derart ausgebildet sind, dass beim Verschwenken der Plattenabschnitte (12, 14) aus ihrer ersten Stellung in die zweite Stellung die Trägerplatte (16) aus der Transportstellung in die Arbeitsstellung aufgerichtet wird.

9. Absteckmarker nach einem der Ansprüche 6 bis 8, **dadurch gekennzeichnet, dass** die durch den zweiten Rand begrenzte Durchbrechung (48, 56) schlitzförmig und in beiden Plattenabschnitten (12, 14) ausgebildet ist.

10. Absteckmarker nach einem der Ansprüche 1 bis 9, **gekennzeichnet durch** eine an der Trägerplatte (16) angeordnete Halterung (58) für einen ein Reflexionselement tragenden Stab (60) derart, dass der Bezugspunkt oder die Bezugsebene des an dem Stab (60) angeordneten Reflexionselementes mit der Bezugsebene des an der Trägerplatte angeordneten Reflexionselementes (22) zusammenfällt.

11. Absteckmarker nach Anspruch 10, **dadurch gekennzeichnet, dass** die Halterung (58) eine Steckaufnahme (61) mit einer konischen Stecköffnung zur Aufnahme eines konischen Endabschnittes (62) des Stabes (60) hat.

12. Absteckmarker nach Anspruch 11, **dadurch gekennzeichnet, dass** das konische Stabende (62) mindestens teilweise aus einem ferromagnetischen Material besteht und dass in der Stabaufnahme (61) der Halterung (58) ein Magnet (63) angeordnet ist.

13. Absteckmarker nach einem der Ansprüche 10 bis 12, **dadurch gekennzeichnet, dass** die Halterung (58) einstückig mit der Trägerplatte (16) ist.

14. Absteckmarker nach einem der Ansprüche 10 bis 12, **dadurch gekennzeichnet, dass** die Halterung (58) lösbar mit der Trägerplatte (16) verbindbar ist.

15. Absteckmarker nach Anspruch 14, **dadurch gekennzeichnet, dass** die Halterung (58) auf die Trägerplatte (16) aufklipsbar ist.

16. Absteckmarker nach einem der Ansprüche 1 bis 15, **dadurch gekennzeichnet, dass** die Platten (12, 14, 16) jeweils einteilig aus Kunststoff gespritzt sind.

## Claims

1. A stake-out marker for staking out buildings and the like with a foot plate (10) and a carrier plate (16) carrying a reflection element (22) forming a target marker, wherein the foot plate (10) has at least one perforation (48, 50, 56) with a first edge (52) extending parallel to the carrier plate (16), which extends in its work position perpendicular with regard to the foot plate (10), in the reference plane (20) of the reflection element (22), and with a second edge extending perpendicularly with regard to the first edge in a plane extending perpendicularly to the foot plate (10) through the center of the reflection element (22), **characterized in that** the stake-out marker being formed such that the carrier plate (16) can be adjusted relative to the foot plate(10) between a transport position in which the carrier plate (16) extends substantially parallel to the foot plate (10) and a work position in which the carrier plate (16) extends perpendicularly to the foot plate (10).

2. The stake-out marker according to claim 1, **characterized in that** the foot plate (10) and the carrier plate (16) are connected to one another by an articulation.

3. The stake-out marker according to claim 1 or 2, **characterized in that** the carrier plate (16) can be detachably locked in its work position relative to the footplate (10).

4. The stake-out marker according to claim 3, **characterized in that** a catch element (44) effecting the locking is formed on the carrier plate (16) and/or on the foot plate (10).

5. The stake-out marker according to one of claims 2 to 4, **characterized in that** an edge delimiting the articulation slot between the carrier plate (16) and the foot plate (10) forms said first edge (52).

6. The stake-out marker according to one of claims 1 to 5, **characterized in that** the foot plate (10) comprises two plate sections (12, 14) that are at least approximately of the same size and that are articulated to one another in such a manner that they can be folded between a first position which corresponds to the transport position and in which they lie parallel to one another and a second position which corresponds to the work position and in which they are aligned with one another in a common plane.

7. The stake-out marker according to claim 6, **characterized in that** the two plate sections (12, 14) are connected by a common articulation to one another and to the carrier plate (16) in such a manner that they enclose the carrier plate (16) between them in their first position.

8. The stake-out marker according to one of claims 6 or 7, **characterized in that** cam elements (38, 40, 42) are formed on at least one of the plate sections (12, 14) and/or the carrier plate (16) in such a manner that during the pivoting of the plate sections (12, 14) out of their first position into the second position the carrier plate (16) is raised up out of the transport position into the work position.

9. The stake-out marker according to one of claims 6 to 8, **characterized in that** the perforation (48, 56) limited by the second edge is formed is formed as a slot in both plate sections (12, 14).

10. The stake-out marker according to one of claims 1 to 9, **characterized in that** a holder (58) for a rod (60) carrying a reflection element is arranged on the carrier plate (16) in such a manner that the reference point or the reference plane of the reflection element arranged on the rod (60) coincides with the reference plane of the reflection element (22) arranged on the carrier plate.

11. The stake-out marker according to claim 10, **characterized in that** the holder (58) has an insertion receptacle(61) with a conical insertion opening for receiving a conical end section (62) of the rod (60).

12. The stake-out marker according to claim 11, **characterized in that** the conical rod end (62) consists at least partially of a ferromagnetic material, and that a magnet (63) is arranged in the rod receptacle (61) of the holder (58).

13. The stake-out marker according to one of claims 10, to 12, **characterized in that** the holder (58) is formed integrally with the carrier plate (16).

14. The stake-out marker according to one of claims 10 to 12, **characterized in that** the holder (58) can be detachably connected to the carrier plate (16).

15. The stake out marker according to claim 14, **characterized in that** the holder (58) can be clipped onto the carrier plate (16).

16. The stake-out marker according to one of claims 1 to 15, **characterized in that** the plates (12, 14, 16) are each injection molded as one piece from plastic.

## Revendications

1. Marqueur de délimitation destiné à délimiter des bâtiments et similaires, comprenant une plaque d'assise (10) et une plaque de support (16), qui porte un élément réfléchissant (22) formant un marquage de visée, la plaque d'assise (10) présentant au moins un perçage (48, 50, 56) pourvu d'un premier bord (52) qui s'étend parallèlement à la plaque de support (16), perpendiculaire à la plaque d'assise (10) dans une position de travail, dans le plan de référence (20) de l'élément réfléchissent (22), et d'un deuxième bord, qui s'étend perpendiculairement au premier bord dans un plan qui s'étend perpendiculairement à la plaque d'assise (10) à travers le centre de l'élément réfléchissant (22), **caractérisé en ce que** le marqueur de délimitation est conçu de telle sorte que la plaque de support (16) peut se déplacer par rapport à la plaque d'assise (10) entre une position de transport, dans laquelle la plaque de support (16) se situe sensiblement parallèlement à la plaque d'assise (10), et la position de travail, dans laquelle la plaque de support (16) est perpendiculaire à la plaque d'assise (10).

2. Marqueur de délimitation selon la revendication 1, **caractérisé en ce que** la plaque d'assise (10) et la plaque de support (16) sont reliées l'une à l'autre par une articulation.

3. Marqueur de délimitation selon la revendication 1 ou 2, **caractérisé en ce que** la plaque de support (16), dans sa position de travail, peut être bloquée de manière libérable par rapport à la plaque d'assise (10).

4. Marqueur de délimitation selon la revendication 3, **caractérisé en ce qu'**un élément d'encliquetage (44) provoquant le blocage est réalisé sur la plaque de support (16) et/ou la plaque d'assise (10).

5. Marqueur de délimitation selon l'une quelconque des revendications 2 à 4, **caractérisé en ce qu'**un bord délimitant la fente de l'articulation entre la plaque de support (16) et la plaque d'assise (10) forme ledit premier bord (52).

6. Marqueur de délimitation selon l'une quelconque des revendications 1 à 5, **caractérisé en ce que** la plaque d'assise (10) comporte deux sections de plaque (12, 14) au moins approximativement de même dimension, qui sont reliées l'une à l'autre de manière articulée, de telle manière qu'elles peuvent se rabattre entre une première position qui correspond à la position de transport et dans laquelle elles sont parallèles l'une à l'autre, et une deuxième position qui correspond à la position de travail et dans laquelle elles se situent au même niveau l'une que l'autre dans un plan commun.

7. Marqueur de délimitation selon la revendication 6, **caractérisé en ce que** les deux sections de plaque (12, 14) sont reliées l'une à l'autre par une articulation commune et sont reliées à la plaque de support (16) de telle sorte que, dans leur première position, elles renferment la plaque de support (16) entre elles.

8. Marqueur de délimitation selon la revendication 6 ou 7, **caractérisé en ce que** des éléments d'entrainement (38, 40, 42) sont réalisés sur au moins une des sections de plaque (12, 14) et/ou sur la plaque de support (16), de telle sorte que, lorsque les sections de plaque (12, 14) pivotent de leur première position dans la deuxième position, la plaque de support (16) est redressée de la position de transport dans la position de travail.

9. Marqueur de délimitation selon l'une quelconque des revendications 6 à 8, **caractérisé en ce que** le perçage (48, 56) délimité par le deuxième bord est en forme de fente et est ménagé dans les deux sections de plaque (12, 14).

10. Marqueur de délimitation selon l'une quelconque des revendications 1 à 9, **caractérisé par** un élément de retenue (58), agencé sur la plaque de support (16), pour une barre (60) portant un élément réfléchissant, de telle sorte que le point de référence ou le plan de référence de l'élément réfléchissant agencé sur la barre (60) coïncide avec le plan de référence de l'élément réfléchissant (22) agencé sur la plaque de support.

11. Marqueur de délimitation selon la revendication 10, **caractérisé en ce que** l'élément de retenue (58) présente un logement enfichable (61) présentant une ouverture enfichable conique pour la réception d'une section d'extrémité conique (62) de la barre (60).

12. Marqueur de délimitation selon la revendication 11, **caractérisé en ce que** l'extrémité de barre conique (62) est constituée au moins en partie d'un matériau ferromagnétique et **en ce qu'**un aimant (63) est agencé dans le logement de barre (61) de l'élément de retenue (58).

13. Marqueur de délimitation selon l'une quelconque des revendications 10 à 12, **caractérisé en ce que** l'élément de retenue (58) et la plaque de support (16) forment une seule pièce.

14. Marqueur de délimitation selon l'une quelconque des revendications 10 à 12, **caractérisé en ce que** l'élément de retenue (58) peut être relié de manière détachable à la plaque de support (16).

15. Marqueur de délimitation selon la revendication 14, **caractérisé en ce que** l'élément de retenue (58) peut être clipsé sur la plaque de support (16).

16. Marqueur de délimitation selon l'une quelconque des revendications 1 à 15, **caractérisé en ce que** les plaques (12, 14, 16) sont chacune moulées par injection d'une seule pièce en matière plastique.
